# EUROPÄISCHE PATENTSCHRIFT

(11) **EP 0 786 588 B1**
(45) Veröffentlichungstag und Bekanntmachung des Hinweises auf die Patenterteilung: **23.08.2000**
(21) Anmeldenummer: 97100276.1
(22) Anmeldetag: 09.01.1997
(51) Int. Cl.: F02B 37/18

(54) **Elektronische Regelung für eine aufgeladene Brennkraftmaschine**
Electronic control of a turbocharged internal combustion engine
Contrôle éléctronique d'un moteur à combustion interne suralimenté

(30) Priorität: 23.01.1996 DE 19602265
(43) Veröffentlichungstag der Anmeldung: 30.07.1997
(73) Patentinhaber: Bayerische Motoren Werke Aktiengesellschaft, 80788 München (DE)
(72) Erfinder: Hoerster, Christoph, Dr., 81739 München (DE); Missy, Stephan, 85298 Scheyern (DE); Ranzinger, Günter, 85748 Garching (DE); Mackay, Stewart, 81541 München (DE)
(74) Vertreter: Bücken, Helmut

(56) Entgegenhaltungen:
- DE-A- 3 943 010
- US-A- 5 447 031
- PATENT ABSTRACTS OF JAPAN vol. 016, no. 474 (M-1319), 2.Oktober 1992 & JP 04 171224 A (TOYOTA MOTOR CORP), 18.Juni 1992,

## Beschreibung

Die Erfindung betrifft eine elektronische Regelung einer aufgeladenen Brennkraftmaschine, deren Abgas-Turbolader ein im Hinblick auf eine gewünschte Zylinderfüllung ansteuerbares Abblaseventil zugeordnet ist, und wobei eine Plausibilitätskontrolle vorgesehen ist, derart, daß ein Vergleich mit Kontrollwerten, die aus den gewünschten Brennkraftmaschinen-Betriebspunkten abgeleitet werden, erfolgt, und wobei eine signifikante Abweichung eine Fehlermeldung auslöst. Zum bekannten Stand der Technik wird neben der DE 39 43 010 C2 oder der DE 36 23 541 C2 insbesondere auf das japanische Patent Abstract zu JP 04171224 A verwiesen.

Heutige Brennkraftmaschinen mit Abgas-Turboaufladung arbeiten üblicherweise mit einer Ladedruckregelung. Dabei gibt der Betreiber der Brennkraftmaschine einen Lastwunsch vor, welcher zusammen mit der aktuellen Drehzahl der Brennkraftmaschine eine gewünschte Zylinderfüllung der Brennkraftmaschinen-Zylinder ergibt. In einem bevorzugten Anwendungsfall handelt es sich bei der Brennkraftmaschine um die Antriebsmaschine eines Kraftfahrzeuges; hier wird der Lastwunsch vom Fahrer über das Fahrpedal vorgegeben. Um die gewünschte Zylinderfüllung zu erreichen, wird ein üblicherweise dem Turbinenteil des Abgas-Turboladers vorgeschaltetes Abblaseventil entsprechend angesteuert, derart, daß gerade soviel Abgas der Brennkraftmaschine über dieses Turbinenteil geleitet wird, daß das vom Turbinenteil angetriebene Verdichterteil des Abgas-Turboladers eben die gewünschte Zylinderfüllung fördert bzw. bereitstellt. Gemessen werden kann die Zylinderfüllung dabei durch Druckmessung, beispielsweise in der Sauganlage der Brennkraftmaschine, oder auch durch Ermittlung des in die Brennkraftmaschinen-Sauganlage gelangenden Luftmengen- oder Luftmassenstromes.

Bei einem derartigen geschilderten Regelungssystem für eine aufgeladene Brennkraftmaschine besteht noch keine Möglichkeit, das Lasterfassungssystem, bestehend aus den Lasterfassungssensoren (z. B. Heißfilm-Luftmassenmesser oder Drucksensor, sowie Lastwunsch- oder Fahrpedalgeber und/oder Drosselklappenwinkelsensor) und die dazugehörigen Korrektursensoren (z. B. Höhensensor, Ansauglufttemperatursensor) auf korrekte Funktion hin zu überprüfen. Möglich wäre dies lediglich mit einem redundanten System, bei welchem jeder Sensor doppelt vorhanden wäre, was jedoch für die Praxis zu aufwendig ist. Liefert nun einer der Sensoren falsche Signale, so könnte die Brennkraftmaschine vom Abgas-Turbolader eine zu hohe Zylinderfüllung erhalten und Schaden nehmen. Auch könnte der Abgas-Turbolader aufgrund einer falschen Ansteuerung selbst geschädigt werden. Von besonderer Bedeutung ist diese Problematik bei Brennkraftmaschine, die mit zumindest zwei parallel wirkenden Abgas-Turboladern versehen sind, deren Abblaseventile gemeinsam angesteuert werden. Derartige Anordnungen sind beispielsweise bei Brennkraftmaschinen der V-Bauart üblich. Hier ist an den Abgaskrümmern jeder Zylinderreihe üblicherweise ein eigener Abgas-Turbolader vorgesehen, deren Verdichterteile die Ansaugluft jedoch in eine für beide Zylinderreihen gemeinsame Sauganlage fördern. Da nun die elektronische Regelung versucht, bei einem bestimmten Bei triebspunkt der Brennkraftmaschine eine bestimmte Zylinderfüllung zu erzeugen, wird immer dann, wenn einer der beiden Turbolader lediglich mangelhaft arbeitet, die Ansteuerung derart erfolgen, daß der andere Turbolader einen umso größeren Luftmassenstrom fördert. Dies kann jedoch letztendlich zu einer Überlastung dieses Turboladers führen.

Im japanischen Patent Abstract zu JP 04171224A ist eine elektronische Regelung für eine aufgeladene Brennkraftmaschine nach dem Oberbegriff des Anspruchs 1 beschrieben, bei der eine Kontrollmöglichkeit besteht. Dabei wird der Druck im Ansaugsystem überwacht und mit Kontrollwerten verglichen, die sich bei bestimmten Brennkraftmaschinen-Betriebsbedingungen einstellen müßten. Hiermit ist jedoch zum einen die bereits geschilderte Problematik bezüglich zweier parallel arbeitender Abgas-Turbolader nicht lösbar, da bei Versagen eines der beiden Turbolader der andere aufgrund der Ladedruck-Regeung weiterhin versuchen würde, den gewünschten Druck im Ansaugsystem einzustellen, so daß dieser noch arbeitende Abgas-Turbolader unzulässig hoch belastet werden würde, ohne daß ein nicht mit dem jeweiligen Kontrollwert korrelierenden Druckwert vorläge. Aber auch bei Brennkraftmaschinen mit lediglich einem Abgas-Turbolader kann diese bekannte elektronische Regelung nur grobe Anhaltswerte liefern, d.h. lediglich eklatante Fehler erkennen.

Nach der US-A-5 447 031 werden Mittelwerte der geregelten Ladedruckwerte als Parameter der Plausibilitäts Kontrolle benutzt.

Aufgabe der Erfindung ist es daher, eine demgegenüber verbesserte Regelung nach dem Oberbegriff des Anspruchs 1 aufzuzeigen.
Zur Lösung dieser Aufgabe ist vorgesehen, daß die Ansteuerwerte für das Abblaseventil mit plausiblen Kontrollwerten verglichen werden, die mit einem aus der Ladedruckregelung abgeleiteten Korrekturfaktor beaufschlagt werden, der die Umgebungs-Randbedingungen, wie die Ansaugtemperatur und den Umgebungsluftdruck, berücksichtigt. Vorteilhafte Weiterbildungen sind Inhalt der Unteransprüche.

Erfindungsgemäß erfolgt somit in der elektronischen Regelung eine Überprüfung bzw. eine Plausibilitätskontrolle bezüglich der Ansteuerwerte für das Abblaseventil (oder im Falle mehrerer Abgas-Turbolader: für die Abblaseventile). Hierzu erfolgt ein Vergleich mit sog. plausiblen Kontrollwerten, die beispielsweise in einem Kennfeld abgelegt sein können. Zumindest theoretisch sind nämlich die Ansteuerwerte für das Abblaseventil bei unveränderten Umgebungsbedingungen stets gleich. Insofern könnten diese beispielsweise in einem Kennfeld abgelegten Kontrollwerte auch als Vorsteuerwerte fungieren. Ebenfalls theoretisch kann nun bereits bei einer geringfügigen Abweichung zwischen dem für eine gewünschte Zylinderfüllung erforderlichen, von der elektronischen Regelung ermittelten Ansteuerwert und dem für den gewünschten Brennkraftmaschinen-Betriebspunkt abgelegten Kontrollwert auf Unstimmigkeiten im System und somit auf einen möglichen Fehler geschlossen werden. Tatsächlich empfiehlt es sich jedoch, eine gewisse Abweichungs-Toleranz zuzulassen, ehe mit Sicherheit auf das Vorliegen eines Fehlers geschlossen werden kann, weshalb - wie im Patentanspruch 1 angegeben - erst bei Vorliegen einer signifikanten Abweichung eine Fehlermeldung ausgelöst wird.

Die Toleranzschwelle für die Abweichung der Ansteuerwerte von den zugehörigen Kontrollwerten könnte theoretisch so groß gewählt werden, daß eine Anpassung der Kontrollwerte an unterschiedliche Umgebungsbedingungen überhaupt nicht durchgeführt werden muß. Dann werden jedoch lediglich Fehler erkannt, deren Auswirkungen immens sind. Daher wird weiterhin vorgeschlagen, die Kontrollwerte an die aktuellen Umgebunsbedingungen anzupassen, d.h. zu adaptieren, da dann die Toleranzschwelle für eine signifikante Abweichung, d. h. der zulässige Abweichungs-Betrag kleiner gewählt werden kann und somit auch bereits geringfügigere Fehler mit kleineren Auswirkungen erkannt werden können. Sind die Kontrollwerte beispielsweise in einem Kennfeld, das als eine Eingangsgröße die Brennkraftmaschinen-Drehzahl und als andere Eingangsgröße den Lastwunsch aufweist, abgelegt, so können diese plausiblen Kontrollwerte mit einem aus dem Umgebungs-Randbedingungen abgeleiteten Korrekturfaktor beaufschlagt werden. Relevante Umgebungs-Randbedingungen sind hierbei insbesondere der Umgebungsluftdruck sowie die Ansauglufttemperatur. Ein dementsprechender Korrekturfaktor wird im übrigen oftmals auch bereits in der eigentlichen Ladedruckregelung berechnet, die - wie bereits erläutert - im jeweiligen Brennkraftmaschinen-Betriebspunkt für die Bereitstellung der gewünschten Zylinderfüllung sorgt. Insofern kann zur Adaption der plausiblen Kontrollwerte dann auf den sog. Randbedingungs-Korrekturfaktor der Ladedruckregelung zurückgegriffen werden.

Es kann empfehlenswert sein, eine Adaption der Kontrollwerte nicht nur hinsichtlich der Umgebungs-Randbedingungen, sondern auch hinsichtlich weiterer Randbedingungen durchzuführen. So sind an den einzelnen Bauteilen Alterungserscheinungen festzustellen, die über der Lebensdauer der aufgeladenen Brennkraftmaschine eine zumindest geringfügige Änderung der Kontrollwerte erforderlich machen. Beispielshalber sei hierfür die Schließfeder des Abblaseventiles genannt, welche - wie jedes Federelement - Setzerscheinungen zeigt, so daß über die Lebensdauer betrachtet eine Änderung der Ansteuerwerte und somit auch eine Änderung der Kontrollwerte erforderlich ist.

Es ist auch möglich, die Adaption hinsichtlich weiterer Randerscheinungen, z. B. Alterungsprozesse, nicht an den Kontrollwerten selbst vorzunehmen, sondern beim zulässigen Betrag für die Abweichungen zwischen den Ansteuerwerten und den Kontrollwerten zu berücksichtigen. Durch laufende Anpassung dieses zulässigen Betrages für die Abweichungen zwischen Ansteuerwerten und Kontrollwerten ist somit sichergestellt, daß auch nur dann eine signifikante Abweichung erkannt wird, wenn diese Abweichung eben nicht durch geänderte Randbedingungen hervorgerufen wurde, sondern durch einen irgendwie gearteten Fehler.

Bezüglich der Adaption - sei es eine Adaption der Kontrollwerte oder des zulässigen Abweichungsbetrages - kann es empfehlenswert sein, einen Maximalwert für diese laufende Anpassung vorzusehen. Wie bereits erläutert können in dieser laufenden Anpassung beispielsweise des sog. Korrekturfaktors nämlich auch Alterungserscheinungen einzelner Bauteile berücksichtigt sein. Nun mag ein gewisser Umfang dieser Alterungserscheinungen noch zulässig sein, jedoch ist irgendwann ein Grenzwert erreicht, bei Erreichen dessen eine einwandfreie Funktion nicht mehr sichergestell ist. In diesem Falle sollte dann keine Anpassung/Adaption erfolgen, vielmehr sollte dann tatsächlich eine signifikante Abweichung erkannt und somit eine Fehlermeldung ausgelöst werden.

Lediglich der Vollständigkeit halber sei erwähnt, daß bei Vorliegen einer signifikanten Abweichung die Fehlermeldung beispielsweise über eine einfache Warnlampe erfolgen kann, daß aber daneben auch Abhilfemaßnahmen eingeleitet werden können. So kann beispielsweise der eigentliche Regelungsprozeß abgeschaltet und auf eine Vorsteuerung umgeschaltet werden - beispielsweise unter Zuhilfenahme der adaptierten Kontrollwerte - oder es kann überhaupt das Abblaseventil vollständig geöffnet werden, um den Turbolader sowie die Brennkraftmaschine geringstmöglichst zu belasten. Stets ist mit der erfindungsgemäßen elektronischen Regelung sichergestellt, daß plötzlich bzw. sporadisch auftretende Fehler, beispielsweise im Luftmassenmeßsystem, am Lastwunschgeber, an anderen Sensoren, generell in der Luftführung oder in der Mechanik des Abgas-Turboladers erkannt werden können. Dabei kann durch Bewerten der nachgeführten, d. h. adaptierten Größen (Kontrollwerte, Korrekturfaktoren oder zulässiger Abweichungs-Betrag) frühzeitig auf erhöhten Verschleiß oder mechanische Fehleinstellungen reagiert werden.

## Patentansprüche

1. Elektronische Regelung einer aufgeladenen Brennkraftmaschine, deren Abgas-Turbolader ein im Hinblick auf eine gewünschte Zylinderfüllung ansteuerbares Abblaseventil zugeordnet ist, und wobei eine Plausibilitätskontrolle vorgesehen ist, derart, daß ein Vergleich mit Kontrollwerten, die aus den gewünschten Brennkraftmaschinen-Betriebspunkten abgeleitet werden, erfolgt, und wobei eine signifikante Abweichung eine Fehlermeldung auslöst, dadurch gekennzeichnet, daß die Ansteuerwerte für das Abblaseventil mit plausiblen Kontrollwerten verglichen werden, die mit einem aus der Ladedruckregelung abgeleiteten Korrekturfaktor beaufschlagt werden, der die Umgebungs-Randbedingungen, wie die Ansaugtemperatur und den Umgebungsluftdruck, berücksichtigt.

2. Elektronische Regelung Anspruch 1,
dadurch gekennzeichnet, daß der noch zulässige Betrag für die Abweichungen zwischen Ansteuerwerten und Kontrollwerten laufend angepaßt wird.

3. Elektronische Regelung nach Anspruch 1 oder 2,
dadurch gekennzeichnet, daß ein Maximalwert für die laufende Anpassung des zulässigen Abweichungs-Betrages und/oder für den Korrekturfaktor aus der Ladedruckregelung vorgesehen ist.

4. Elektronische Regelung nach einem der vorangegangenen Ansprüche für eine Brennkraftmaschine mit zumindest zwei parallel wirkenden Abgas-Turboladern, deren Abblaseventile gemeinsam angesteuert werden.

## Claims

1. An electronic control system for a supercharged internal combustion engine comprising a turbo-supercharger associated with a blow-off valve actuated in order to obtain a desired cylinder charge, wherein a plausibility check is provided in the form of a comparison with control values derived from the desired engine operating points, and wherein a significant deviation triggers a fault report, characterised in that the values for actuating the blow-off valve are compared with plausible control values corrected by a factor derived from the boost control and taking account of ambient boundary conditions such as the intake temperature and the ambient air pressure.

2. An electronic control system according to claim 1,
characterised in that the just permissible amount of deviation between actuating values and control values is continuously adjusted.

3. An electronic control system according to claim 1 or claim 2,
characterised in that a maximum value is provided for the continuous adjustment of the permissible deviation and/or for the corrective factor originating from the boost control system.

4. An electronic control system according to any of the preceding claims for an engine comprising at least two turbo-superchargers operating in parallel and with jointly actuated blow-off valves.

## Revendications

1. Régulation électronique d'un moteur à combustion interne suralimenté dont le turbocompresseur de gaz d'échappement est associé à une vanne d'évacuation de gaz commandée pour réaliser le remplissage de cylindre souhaité, un contrôle de plausibilité étant prévu pour effectuer une comparaison avec des valeurs de contrôle déduites des points de fonctionnement souhaités du moteur à combustion interne, et pour qu'une déviation significative déclenche un signal de défaut,
caractérisée en ce que
les valeurs de commande de la vanne des gaz d'échappement sont comparées à des valeurs de contrôle plausibles auxquelles on applique un coefficient de correction déduit de la régulation de pression de charge, ce coefficient de correction tenant compte des conditions limites, telles que la température d'aspiration et la pression de l'air ambiant.

2. Régulation électronique selon la revendication 1,
caractérisée en ce qu'
on adapte en continu l'amplitude encore autorisée entre la déviation des valeurs de commande et des valeurs de contrôle.

3. Régulation électronique selon la revendication 1 ou 2,
caractérisée par
une valeur maximale pour l'adaptation continue d'une amplitude de déviation autorisée et/ou du coefficient de correction à partir de cette régulation de pression d'alimentation.

4. Régulation électronique selon l'une quelconque des revendications précédentes pour un moteur à combustion interne avec au moins deux turbocompresseurs de gaz d'échappement fonctionnant en parallèle, dont les vannes de gaz d'échappement sont commandées ensemble.
